# EUROPEAN PATENT SPECIFICATION

(11) **EP 0 729 872 B1**
(45) Date of publication and mention of the grant of the patent: **13.03.2002**
(21) Application number: 95106957.4
(22) Date of filing: 09.05.1995
(51) Int. Cl.: B60T 17/22

(54) **Railway automatic brake control valve test unit**
Automatische Testeinrichtung für Bremssteuerventil von Schienenfahrzeugen
Unité de test automatique pour soupape de contrôle de freinage pour véhicules ferroviaires

(30) Priority: 02.03.1995 US 396815
(43) Date of publication of application: 04.09.1996
(73) Proprietor: WESTINGHOUSE AIR BRAKE COMPANY, Wilmerding, PA 15148 (US)
(72) Inventor: Hart, James E., Trafford, Pennsylvania 15085 (US); Gaughan, Edward W., Irwin, Pennsylvania 15642 (US); Reid, Jeffrey D., St. Catharines, Ontario L2R 2E3 (CA); Troiani, Vincent, New Florence, Pennsylvania 15944 (US)
(74) Representative: Petri, Stellan

(56) References cited:
- WO-A-90/01440
- DE-A- 2 746 921
- US-A- 5 172 316

## Description

### BACKGROUND OF THE INVENTION

### 1. Field of the Invention

This invention relates generally to brake control valve devices for railway cars and more particularly to means adapted to such brake control valve devices for directly accessing fluid lines and conducting a series of evaluative pressure manipulations thereof.

### 2. Description of the Prior Art

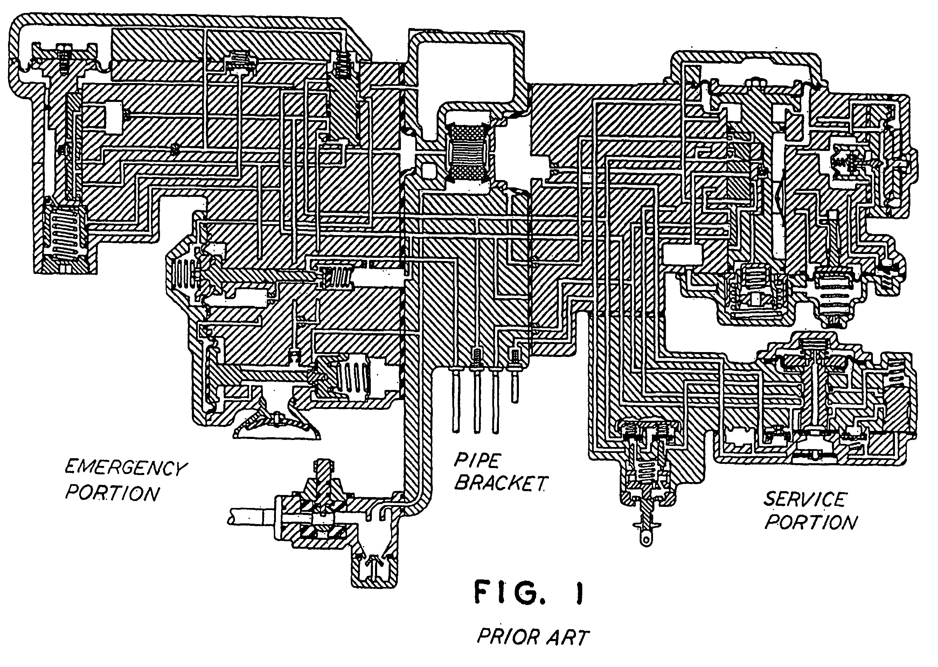

Typical freight control valves such as the ABD, ABDW, DB-60 and ABDX control valves, are comprised of a pipe bracket portion having a service portion and an emergency portion mounted on opposite sides or faces of the pipe bracket. Such a typical control valve assembly is shown in prior art diagrammatic Figure 1. Typically, a third side, the rear, of the pipe bracket portion has a number of connections for connecting the pipe bracket portion to piping of the freight car. These connections typically include connections to the brake pipe, the brake cylinder retaining valve, the brake cylinder, the emergency reservoir and the auxiliary reservoir. The connections to the brake pipe, the brake cylinder retaining valve, the brake cylinder, the emergency reservoir and the auxiliary reservoir are each respectively connected to a fluid passageway within the pipe bracket portion. The pipe bracket passageways connected to these pneumatic pipes permits the pipe bracket to provide the necessary communication of pressures to both the service and emergency valve portions.

Currently, when it is desired to test a freight brake control valve, the prior art testing device is attached at one end directly to the brake pipe and at an opposite end to a pressurized air source, such as a compressor. By rotating a rotary valve through various positions, brake operation is simulated. For example, while charging the brake pipe line with the pressurized air source, the rotary valve may be positioned so that the pressurized air must travel through a relatively narrow orifice, thus representing slow charging. The rotary valve could also be rotated so that the pressurized air flows through a wider orifice, thus representing quick charging. A lap position of the rotary valve may also be selected in which there is no orifice, thus sealing the brake pipe so that the brake pipe may be tested for leakage. The rotary valve may also be indexed through several application settings in which air is allowed to leave the brake pipe through varying sized passages, thus representing various degrees of brake application.

The prior art testing device is equipped with a pressure gauge and a flowmeter. The prior art testing device thus enabled several testing options, which included visually watching the brake cylinder for operation, timing the various brake applications manually (i.e., through a stop watch) and detecting leakage by monitoring the flowmeter.

Prior art tests accessed only one channel, the brake pipe channel in which brake pipe pressure is manipulated and the response to the control valve is monitored. In the prior art, the pressures in remaining channels are unknown.

Thus, it can be seen that the prior art on car testing means is limited and consuming. Therefore, an automatic on car testing means is needed.

### SUMMARY OF THE INVENTION

The invention provides a portable, microprocessor controlled single-car test unit for a railway freight brake control valve, having the features of claim1, and a method including the method steps of claim 9. The test unit automatically executes a predetermined series of pressure manipulations to evaluate the operating conditions of the control valve. The control valve is of the type having a pipe bracket portion and a service portion and an emergency portion mounted to the pipe bracket portion. The pipe bracket portion further is connected to a brake pipe, an auxiliary reservoir, an emergency reservoir, a brake cylinder retaining valve and a brake cylinder. Furthermore, a plurality of fluid passageways are provided through the pipe bracket portion for providing fluid communication from the brake pipe, the brake cylinder, the brake cylinder retaining valve, the emergency reservoir, and the auxiliary reservoir. The fluid passageways then travel through to the service portion and the emergency portion. An access port plate, as described in US Patent No. 5,451,099 can also be used.

The presently described test unit accesses all four passageways to the brake pipe, the brake cylinder, the auxiliary reservoir and the emergency reservoir. That allows an operator to directly and positively determine the various valve functions by manipulating and measuring the pressures within those channels.

A number of valves are utilized in the test unit to manipulate the pressure in the fluid passageways connected to the brake pipe. The valves are preferably electro-pneumatic valves. A series of brake pipe exhaust valves are provided along the brake pipe passageway. The brake pipe exhaust valves each have varying amounts of restriction in the flow such that varying exhaust flow rates may be attained when the air is exhausted through selected ones of the exhaust valves. The term "valve" is used in its general sense and may include any means for providing a variable flow restriction to control the rate of flow therethrough.

Furthermore, the test unit preferably has a number of pressure transducers for measuring air pressure in each of the passageways. The pressure transducers and electro-pneumatic valves are controllable by a microprocessor as will be described more fully.

The test unit has means for accessing the fluid passageways that communicate to the brake pipe, the brake cylinder, the emergency reservoir and the auxiliary reservoir. The preferred means for accessing the fluid passageways is a number of access ports which a respective access port is connected to each such passageway. The access ports may be provided directly upon and through a surface of the pipe bracket portion. Alternatively, the access ports may be provided on a plate disposed between the pipe bracket portion and either the emergency portion or the service portion.

The test unit then sealably connects to the access ports, so that the various fluid passageways may be accessed by the test unit. It is preferred that the test unit be connected to the access ports through a housing and an adaptor. Thus, in some embodiments, a housing connects to the access ports of the various passageways. Such housing preferably has internal valve means for preventing the escape of fluid pressure therefrom when the valve means is "closed".

When the fluid pressure within any or all of the passageways is to be tested, an adaptor engages with the housing, "opening" the internal valve means and allowing the fluid under pressure to enter the adaptor. Connections provided on the adaptor then lend to the pressure testing device so that the fluid pressure within the passageways may be analyzed. The adaptor may be provided with a cam system or other means for moving the extending members into and out of the access housing so as to move the internal valve means into and out of the "open" position.

It is preferred that when the fluid pressure within the passageways is not being tested, and the adaptor is removed from the housing, a removable outer cover is provided as a secondary seal over the access housing to compliment the primary seal of the internal valve means and to prevent the entry of dirt or foreign material.

A computer having a microprocessor connected to an input output device records and stores each of the pressure measurements from the pressure transducers. The computer calculates and stores the differences between selected pairs of the pressure measurements. First, elapsed times are measured and stored for a predetermined amount of pressure to be reached in selected ones of the passageways beginning from a predetermined event. Furthermore, the rate of change of selected pressures in the passageways are measured and stored through the computer. The computer then measures and stores second elapsed times from predetermined event to a change in the rate of change of selected pressures onto actual pressures in the passageways.

The pressures, the differences between selected pressures, the rates of changes of the pressures, the first elapsed times and the second elapsed times to predetermined values are then compared through the computer to evaluate the operating condition of the control valve. Finally, the results of these comparisons are stored and outputted.

Other objects and advantages of the invention will become apparent from a description of certain present preferred embodiments thereof shown in the drawings.

### BRIEF DESCRIPTION OF THE DRAWINGS

Figure 1 is a prior art schematic of a railway freight brake control valve showing the passageways running through the pipe bracket portion, the emergency portion and the service portion.
Figure 2a is a perspective view of a pipe bracket portion having access ports provided thereon.
Figure 2b is a perspective view of an access port plate.
Figure 3 is a schematic representation of the test unit connected to a railway freight brake control valve.
Figure 4 is a schematic representation of the operating portion of the test unit.
Figure 5 is a perspective view of a housing and adaptor for connecting the test unit to the pipe bracket portion.
Figure 6 is a cross sectional view of the housing and adaptor taken along line A-A of Figure 5.
Figure 7 is a cross sectional view of the housing and an alternative adaptor taken along line A-A of Figure 5.
Figure 8 is a cross sectional view of the housing and alternative adaptor of Figure 7 taken along line B-B of Figure 5.

### DETAILED DESCRIPTION OF THE PREFERRED EMBODIMENTS

As can be seen in prior art Figure 1, air brake practice incorporates pipe brackets in freight brake control valves which have an emergency portion and a service portion mounted thereto. As can further be seen in Figure 1, various fluid passageways connect the pipe bracket portion with the emergency portion and service portion, respectively. Thus, it is currently the practice in the air brake industry to provide the pipe bracket portion with a number of passageways therethrough.

Selected passageways within the pipe bracket portion open at respective access ports. The access ports may be on the pipe bracket portion directly or may be provided on a plate connected to the pipe bracket portion.

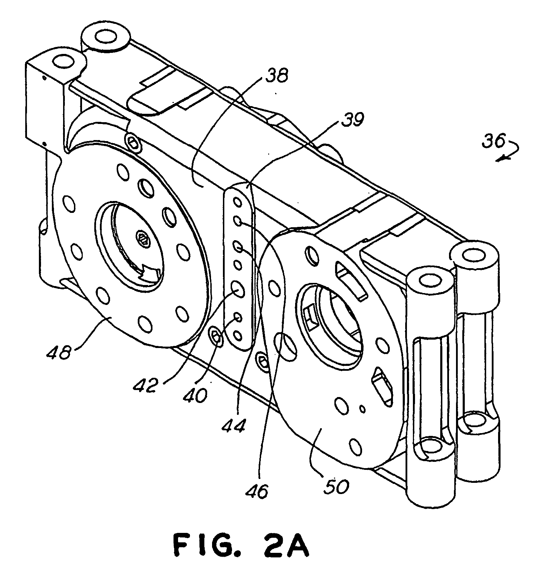

Referring first to Figure 2a, the access ports are shown provided directly on the pipe bracket portion. The pipe bracket portion is preferably a single sided pipe bracket portion 36. The pipe bracket portion 36 is called single sided because the emergency portion and service portion are mounted on the same side or face thereof. As can be seen in the figure, the service portion is mounted upon a surface 48 and the emergency portion is mounted upon a surface 50, both preferably on the same access face 38 of the single sided pipe bracket portion 36.

Provided between the service portion mounting surface 48 and emergency portion mounting surface 50, lies a boss 39. Boss 39 has four access ports 40, 42, 44, 46 provided thereon and extending into the pipe bracket portion 36. Access port 40 connects to the brake cylinder passageway, access port 42 connects to the brake pipe passageway, access port 44 connects to the auxiliary reservoir passageway and access port 46 connects to the emergency reservoir passageway (passageways not shown in Figure 2a). Each passageway is isolated from the others so that the fluid pressure within a passageway is measurable at its respective access port. The boss 39 is preferably integral with the pipe bracket portion 36 and its surface is preferably planar. The brake cylinder passageway, the brake pipe passageway, the auxiliary reservoir passageway and the emergency reservoir passageway are each provided within the pipe bracket portion 36. The passageways and the ports to which they connect are shown and described in greater detail in US Patent No 5, 480, 218.

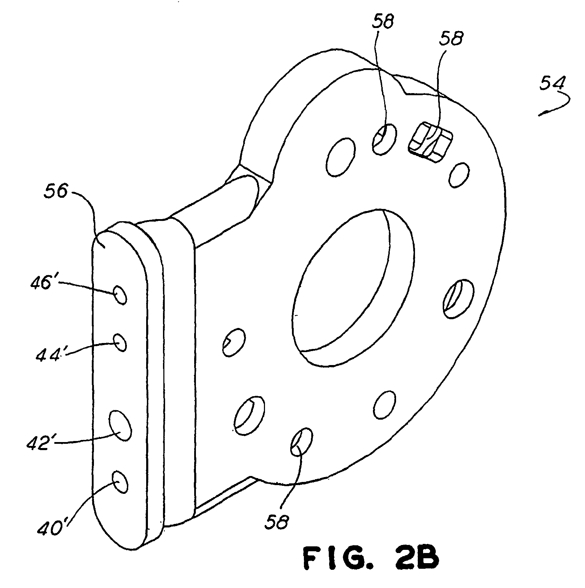

Referring next to Figure 2b, the access ports may be provided on a plate which is connected to the pipe bracket portion and the service portion. As is seen in prior art Figure 1, passageways travel between the pipe bracket portion and both the emergency portion and the service portion. Therefore, at the interface between the pipe bracket portion and the service portion are openings which correspond in size and position. As a means of providing access to the fluid pressures within the passageways, an access plate 54 may be provided between the service portion and the pipe bracket portion.

Access plate 54 is provided with openings 58 on opposed sides so that each access plate opening 58 intersects a respective fluid passageway of the service control valve. Must access plate openings 58 then connects to a respective access port 40', 42', 44', 46' along a boss 56 of the access plate 54. Thus, access port 40' connects to the brake cylinder passageway, access port 42' connects to the brake pipe passageway, access port 44' connects to the auxiliary reservoir passageway and access port 46' connects to the emergency reservoir passageway (passageways not shown in Figure 2b). Each passageway is isolated from the other so that the fluid pressure within a passageway is measurable at its respective access port. The access plate and its passageways and ports are shown and described in greater detail in US Patent No 5, 451, 099.

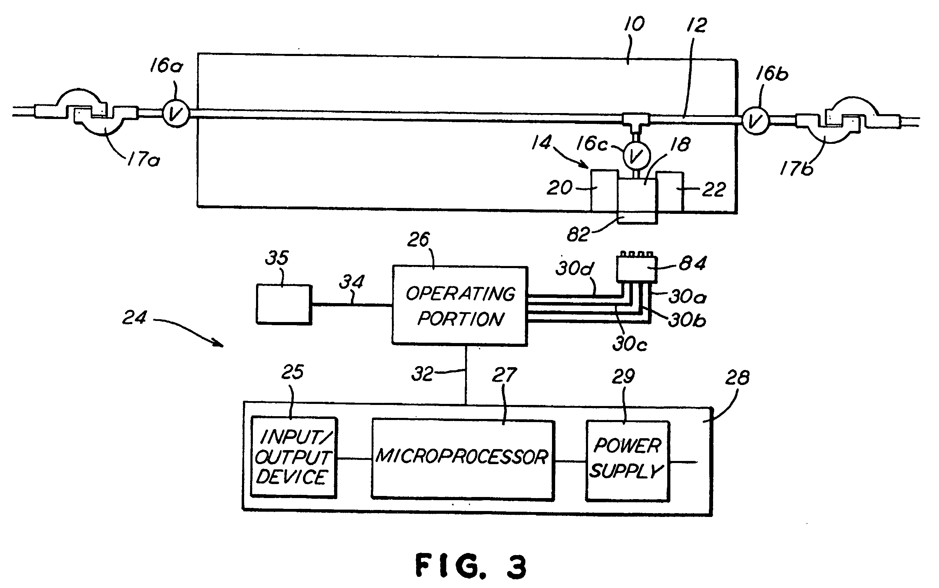

Referring next to Figure 3, a schematic representation of the test unit connected to a railway freight brake control valve is shown. As can be seen in the figure, a railway freight train car 10 is depicted having a brake pipe 12 provided therewith. Cut-off valves 16a, 16b are provided along the brake pipe 12 along opposite ends of the train car 10. Cut-off valves 16a, 16b are movable through "open" and "closed" positions. When cut-off valves 16a, 16b are in an open position, fluid is able to freely travel through the cut-off valves 16a, 16b. When the cut-off valves 16a, 16b are in a closed position, fluid may not travel past cut-off valves 16a, 16b. When the cut-off valves 16a, 16b, located at opposed ends of train car 10, are both in the closed position, the section of brake pipe 12 between the cut-off valves 16a, 16b is isolated. Alternatively, blanked-off connectors 17a, 17b may be fitted on each end of the brake pipe length for the tested car. The blanked-off connectors 17a, 17b thus isolate the length of the brake pipe between the blanked-off connectors. By opening cut-off valves 16a, 16b and using blanked-off connectors 17a, 17b, the length of the brake hose and the glad hand connector seals (not shown) may be tested for leakage.

The brake pipe 12 connects to a control valve 14. A cut-off valve 16c is also provided between brake pipe 12 and control valve 14. Cut-off valve 16c is similarly moveable through "open" and "closed" positions. In this way, control valve 14 may be connected to the fluid in brake pipe 12 when cut-off valve 16c is in a open position. Similarly, control valve 14 is isolated from the fluid in brake pipe 12 when cut-off valve 16c is in the closed position.

However, as described above, access ports 40, 42, 44, 46 are provided along control valve 14. The test device 24 is also schematically depicted in Figure 3. The test device 24 has as its main components an operating portion 26 and a processing portion 28. The operating portion 26 is connected to the control valve 14. As noted above, the access ports 40, 42, 44, 46 are connected to the fluid passageways of the brake cylinder, the brake pipe, the auxiliary reservoir and the emergency reservoir, respectively. The operating portion 26 therefore has means for connecting to the access ports for accessing the fluid pressures within the various passageways of the pipe bracket portion 18.

As will be discussed more fully, the preferred means of connecting the operating portion 26 to the access ports involve having the operating portion connected by a series of pneumatic hoses 30a, 30b, 30c, 30d to an adaptor 84. The adaptor 84 is then engageable with an access housing 82. The access housing 82 is mounted upon and engages the access ports. Thus, the fluid pressure of the brake cylinder passageway travels through access port 40 and through hose 30a into the operating portion 26. The fluid pressure of the brake pipe passageway travels through access port 42 and through hose 30b into the operating portion 26. The fluid pressure of the auxiliary reservoir passageway travels through access port 44 through hose 30c into the operating portion 26. The fluid pressure of the emergency reservoir passageway travels through access port 46, through hose 30d into the operating portion 26. An air supply hose 34 connects a source of compressed air 35 to the operating portion 26.

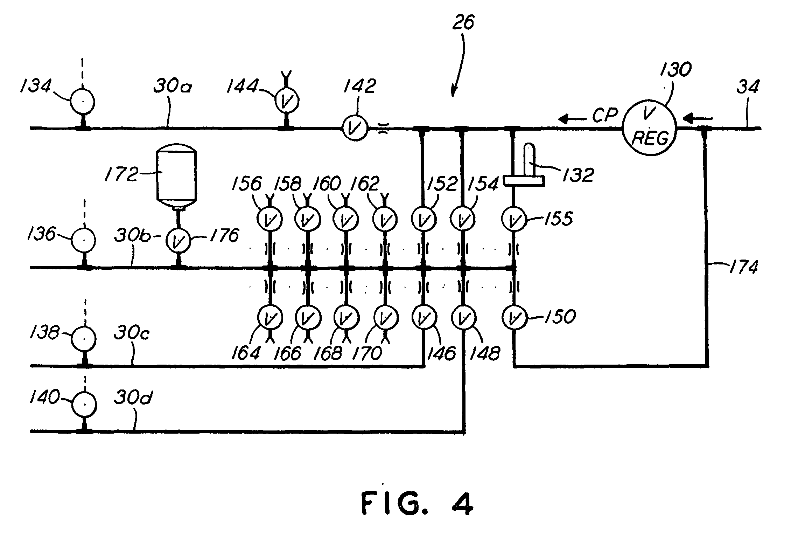

The operating portion 26 is depicted schematically in more detail in Figure 4. Compressed air travels from a compressed air source 35 (not shown in Figure 4) through air supply pneumatic hose section 34. From the air supply hose 34 the compressed air flows into an unregulated air pneumatic hose section 174 and through a pressure regulator 130. Unregulated air pneumatic hose section 174 has a valve 150 provided thereon such that when valve 150 is closed, the compressed air from the air supply pneumatic hose 34 travels solely through the pressure regulator 130. When valve 150 is opened, unregulated compressed air may flow into the brake pipe pneumatic hose 30b.

The regulated compressed air from the pressure regulator 130 may travel through the brake cylinder pneumatic hose 30a and into the brake cylinder (not shown) when the brake cylinder charge valve 142 is open. When brake cylinder charge valve 142 is closed, compressed air may no longer flow into the brake cylinder, and further, compressed air already present in the brake cylinder is retained there. Compressed air may exhaust the brake cylinder through brake cylinder exhaust valve 144.

Regulated air from the pressure regulator 130 may also flow through any one of three parallel paths to the brake pipe pneumatic hose 30b. Each path from the pressure regulator to the brake pipe pneumatic hose 30b has a respective valve 152, 154, 155 provided thereon. The regulated air may flow substantially unrestricted to the brake pipe pneumatic hose 30b when the brake pipe valve 152 is open. The regulated air may also pass with some flow restriction through second brake pipe valve 154 into the brake pipe pneumatic hose 30b when the brake pipe valve 154 is open. Also, the regulated air may travel through a flowmeter 132 into the brake pipe pneumatic hose 30b when valve 155 is open. Of course, valves 152, 154, 155 may also be placed in a closed position in which no fluid may pass therethrough.

The brake cylinder pneumatic hose 30a, the brake pipe pneumatic hose 30b, the auxiliary reservoir pneumatic hose 30c and the emergency reservoir pneumatic hose 30d are each fitted with a respective pressure transducer 134, 136, 138, 140. Thus, the fluid pressure within the brake cylinder, the brake pipe, the auxiliary reservoir and the emergency reservoir may be measured.

The auxiliary reservoir pneumatic hose 30c is connected to the brake pipe pneumatic hose 30b through a valve 146. Valve 146 connects brake pipe to the auxiliary across the service valve diaphragm. Similarly, the emergency reservoir pneumatic hose 30d is connected to the brake pipe pneumatic hose 30b through a valve 148. Thus, fluid communication is made between the auxiliary reservoir pneumatic hose 30c and the brake pipe pneumatic hose 30b and between the emergency reservoir pneumatic hose 30d and the brake pipe pneumatic hose 30b when valves 146, 148, respectively, are open.

A series of brake pipe exhaust valves 156, 158, 160, 162, 164, 166, 168, 170 are provided along the brake pipe pneumatic hose 30b. The brake pipe exhaust valves 156-170 each have varying amounts of restriction in the flow such that varying exhaust flow rates may be attained when the air is exhausted through selected ones of the exhaust valves. A buffer reservoir 172 is connected to the brake pipe pneumatic hose 30b to provide a volume of air at which the pressure transducer 136 may accurately measure the pressure and is separated by valve 176 from hose 30b.

The operating portion 26 is then connected to a processing portion 28. Since the valves of the operating portion 26 (described in more detail below) are electro-pneumatic and since the pressure transducers generate an electrical signal representing the pressure, the operating portion 26 and the processing position may be connected by electrical connections 32.

The processing portion has a microprocessor 27 connected to an input/output device 25 and to a power supply 29. The microprocessor 27 calculates and stores the values of and the differences between selected pairs of pressures of selected access ports taken from transducers 134, 136, 138, 140 and flowmeter 132. First elapsed times are also measured and stored by the microprocessor 27 for a predetermined amount of pressure to be reached in selected ones of the passageways connected to its access port, beginning from a predetermined event. The rate of change of selected pressures in the various passageways are measured and stored as well by the microprocessor 27. The microprocessor 27 then measures and stores second elapsed times from a predetermined event to a change in the rate of change of selected pressures in the various passageways. The pressures, the differences between selected pressures, the rate of changes of the pressures, the first elapsed times, the second elapsed times and the flow readings are then compared by the microprocessor 27 to evaluate the operating condition of the control valve 14. Finally, the results of these comparisons are stored and outputted.

The operation of the operating portion 26 will now be described in greater detail with reference to particular test procedures:

### CHARGING THE CAR

In the prior art valve testing, the control valve distributes air to the auxiliary reservoir, the emergency reservoir and the quick action reservoir during charging. During charging of the car, the regulated air introduced through the brake pipe builds pressure, but temperature effects swing the pressure below that target pressure. An operator must wait for the system air to equalize and must keep trying to reach the target pressure, dealing with temperature-caused pressure swings. First, pressure is built up in the brake pipe, then the control valve feeds the pressure into the auxiliary reservoir and emergency reservoir. This takes a long time since the pressurized air must travel through the control valve including a number of very small chokes.

Referring to Figure 4, for charging with the preferred test unit, the compressed air travels through the air supply pneumatic hose 34 and flows to the brake pipe pneumatic hose 30b. To get up to target pressure, valves 146, 148, 150 are opened. Unregulated air is introduced into the brake pipe pneumatic hose 30b through valve 150. The unregulated air then flows into the auxiliary reservoir pneumatic hose 30c and the emergency reservoir pneumatic hose 30d through valves 146, 148, respectively. Valve 150 is then closed and regulated air through valve 152 takes the brake pipe pressure, auxiliary pressure and emergency pressure to target. Thus, the device utilizes a two pressure air feed supply, one of which is regulated air and the other of which is unregulated air.

With valve 155, open, the flowmeter 132 verifies the flow to the brake pipe pneumatic hose 30b because the air flow through the flowmeter 132 and through valve 152 have parallel paths. Thus, one can interpret what the air flow is through valve 152 by examining the air flow through the flowmeter 132. Then, valve 152 is closed so that the air flow must go through the flowmeter 132 and valve 155 and the air flow into brake pipe hose 30b can be verified.

There is also preferred a reservoir 172 shown along the brake pipe pneumatic hose 30b that is part of the test equipment and is connected to the brake pipe pneumatic hose 30b by valve 176. The reservoir is useful because when a very rapid pull of air flows through the brake pipe pneumatic hose 30b, a transducer placed in that hose cannot provide an accurate reading of the pipe bracket pressure. The reservoir 172 acts as a buffer. Thus, there is a volume of air provided which can be monitored to determine what pressure changes are happening in that brake pipe pneumatic hose 30b.

### RETAINER VALVE

For testing the retainer valve in the prior art, a visual check is performed. The retainer valve is put in an actuated position of high pressure retaining, the control valve is moved to release and the brake cylinder pressure will gradually drop. Eventually the gradual drop in the brake cylinder pressure will stop and the brake cylinder is checked to make sure the brake cylinder has not retracted within a certain amount of time. A potential drawback associated with the prior art test is that the brake cylinder pressure could drop to a small amount - such as 20.7 KPa (3 psi) - and the cylinder will still appear to be actuated despite not having sufficient pressure to fully actuate.

In the preferred test procedure utilizing the test unit, the brake cylinder exhaust valve 144 is closed, the retainer valve (not shown) is turned to high pressure position retaining, then the brake cylinder charge valve 142 is opened which allows regulated air to be introduced into the brake cylinder. The brake cylinder is charged to a pressure level below the set point (i.e., the level of brake cylinder pressure at which the check valve shuts off). Then, the brake cylinder pressure is monitored at transducer 134 (i.e., the pressure valve is measured at different times) to determine whether there is any decrease in the brake cylinder pressure. Lack of decrease in the brake cylinder pressure indicates that the retainer valve is working. Thus, the pressure is monitored to determine how much the brake cylinder pressure drops rather than looking at the brake cylinder. Then, the retainer valve is put in the direct exhaust position and the brake cylinder pressure is monitored at transducer 134 to ensure that the brake cylinder pressure decreases a predetermined amount within a predetermined time period.

Furthermore, instead of waiting for the brake cylinder to reach its operating pressure through air delivered from the service portion after it has been applied and then released (as is done in the prior art testing procedures), a retainer test can be instituted with a valve in release without previously having to have applied it. Air flowing into brake cylinder and thereby to the retainer may be charged directly to valve 142 to under the set point of the retaining check valve. Then it can be determined whether the valve shuts off. This saves time in charging the brake cylinder, air can be applied directly to the brake cylinder, treating the control valve as if it is just in release or charging position. To save time, the car charging and retainer valve tests can be done simultaneously.

### SLACK ADJUSTER

Regarding slack adjuster tests, the prior art requires that the slack adjuster valve be applied and released. This takes a long time due to charging.

With the presently preferred test unit, after applying the control valve with a minimum reduction, the remaining brake cylinder cycling can be done directly. The brake cylinder charge valve 142 allows direct charging of regulated air from the regulator 130 to the brake cylinder. The brake cylinder exhaust valve 144 allows for direct exhausting of air from the brake cylinder. The brake cylinder pressure may be increased directly through the brake cylinder charge valve 142, then the brake cylinder exhaust valve 144 is actuated to directly release that pressure. The brake cylinder charge valve 142 and the brake cylinder exhaust valve 144 perform faster exhaust and charge functions than the control valve, allowing direct manipulation of the brake cylinder.

### QUICK SERVICE LIMITING VALVE

To test the limiting valve with the presently preferred test unit, while the limiting valve is applied, the pressure is maintained so that the auxiliary reservoir/brake pipe valve 146 is opened. That places the service portion in the service lap position. Direct manipulation of the brake cylinder is possible by dropping pressure without the limiting valve being able to compensate for it. Connecting the auxiliary reservoir pneumatic hose 30c to the brake pipe pneumatic hose 30b makes the test very stable and allows manipulation of either valve 152 or valve 154 to hold the brake pipe pressure while the brake cylinder is applied.

In the prior art AB track test, the limiting valve is applied and the brake cylinder pressure is dropped to zero and checked to see whether the brake cylinder pressure builds up again. The technique employed with the presently preferred test unit is very similar. The limiting valve is applied and then the service portion is stalled (i.e., the auxiliary reservoir is connected to the brake pipe so that the slide valve is lapped off). Then, the air pressure in the brake cylinder is dropped through.the brake cylinder exhaust valve 144 to around 0 psi for a period of approximately five seconds. Then the brake cylinder exhaust valve 144 is closed and the brake cylinder pressure is monitored to ensure that it increases.

### EMERGENCY TEST

In the prior art test of emergency application, it is indirectly determined that the air pressure from the emergency reservoir went into brake cylinder and the auxiliary reservoir. Pressures are not known, but a noise is generated when the vent valve piston is actuated once brake pipe pressure is exhausted through the vent valve port. The noise indicates that one part of the valve is working but it does not positively indicate that the entire valve is working. It remains unknown whether the high pressure spool has moved to connect the emergency reservoir to the auxiliary and brake cylinder. Although air from the auxiliary reservoir may have entered the brake cylinder such that brake cylinder pressure and auxiliary reservoir pressure equalize, the emergency reservoir air may not have entered into the brake cylinder and auxiliary reservoir, such that the full effect of emergency has not been achieved. Also, the separate (stand alone) vent valve must be disabled physically for this test.

In contrast, the preferred automatic test unit allows direct checking of the pressures at the brake cylinder, auxiliary reservoir and emergency reservoir through pressure transducers 134, 138, 140. The brake cylinder pressure, the auxiliary reservoir pressure and the emergency reservoir pressure are monitored and should be approximately equal during an emergency application indicating that the auxiliary reservoir, the emergency reservoir and the brake cylinder are in fluid communication. Furthermore, the separate vent valve is not involved in the test and, therefore, does need disabling.

### EMERGENCY ACCELERATED RELEASE

The prior art tested the control valve with the brake line 12 connected and two effective restricted rates for all volumes of brake pipe contained in brake line 12.

The present test device closes valve 16c so that every car will be tested to a uniform volume and rate. The uniform approach standardizes the test for all cars so that some are not tested more strictly or leniently depending on volume and rate combination.

### RELEASE TEST AFTER EMERGENCY

Following an emergency application in the prior art testing procedure, there is a delay for a time period of 75 to 90 seconds from the start of the emergency application before one can recharge due to quick action air draining through a relatively small orifice. To cause a release after emergency, the prior art charges brake pipe through a restriction until 193.1 KPa (28 psi) is reached. The charge path is closed and the brake pipe pressure is then monitored to determine whether brake pipe pressure increases, indicating proper performance.

With the present test unit, it is not necessary to wait for 90 seconds to recharge. An emergency accelerated release of the brake pipe means that the emergency portion has caused brake cylinder pressure to go into brake pipe which provides a very rapid build up of brake pipe pressure. The test unit allows an emergency accelerated release to be achieved without having to wait the built-in time associated with an emergency application of 75-90 seconds.

With the present test unit, brake pipe pressure is reduced to zero psi without creating an emergency application. This makes the service portion and emergency portion respond as if each were in the final stage of an emergency application. The routine of charging to 193.1 KPa (28 psi) and checking for increase can be done immediately without the long delay time.

### MANUAL RELEASE VALVE

The prior art manual release valve test procedure requires the operator to pull a release handle after an emergency application to see that the brake cylinder retracts. Then the control valve is recharged and reapplied to check that the release valve has reset. This recharge is time consuming. Once an emergency application has been instituted, there is can be a 75-90 second delay before the air exits the emergency portion. If air pressure is lost through the actuation of the release valve, then the valve must be reset to ensure proper operation.

The new testing unit also requires the operator to pull. the release handle after an emergency application to see that the brake cylinders retract. After the handle has released, the new testing unit looks to ensure that the auxiliary reservoir and emergency reservoir pressures stop dropping. This verifies that the check valves in the release valve portion have reseated and are not leaking. However, during the reset of the release valve portion test, the new testing unit does not have to charge the car as fully before reapplying the valve. The new testing unit charges brake pipe and looks for emergency pressure to increase indicating that the service portion has moved to release, i.e., charging. This then allows the valve to be applied instead of waiting for the whole system to be charged to 620.5 KPa (90 psi), thereby saving time charging.

### SERVICE RELEASE TEST

Under the prior art test unit, the brakes are applied, then air is supplied to the brake pipe hose through a small orifice. The brake cylinder must suddenly decrease as indicated by a blow of the retainer within a specified time based on length of car. This has a loose relationship to release differential required to release the valve. Currently, there are no minimum times (or too low a release indication too sensitive a valve).

Under the presently preferred test unit, the brakes are applied, then air is supplied to the brake pipe pneumatic hose 30b through valve 154 which has a very small orifice. The brake pipe pressure is built up slowly and the release differential (the differential between the brake pipe pressure versus the auxiliary reservoir pressure) is monitored until a release occurs, then brake cylinder pressure will drop very rapidly. The maximum value of the release differential is monitored and tells that the valve is not too sensitive nor too insensitive.

### PISTON TRAVEL

Under the prior art test unit, the initial brake cylinder piston travel is measured after making a 206.8 KPa (30 psi) reduction. This procedure gets approximately 344.7 KPa (50 psi) in the brake cylinder line.

The current test unit will apply the control valve with a minimum application and then directly charge the brake cylinder through brake cylinder charge valve 142 to obtain 344.7 KPa (50 psi) so that measurements can be more precise.

### APPLIED LEAKAGE TEST

The prior art test unit applies the control valve with a 68.9 KPa (10 psi) reduction using a relieving regulator set 68.9 KPa (10 psi) below fully charge pressure. After the reduction is complete, the flowmeter must not increase from release test by more than 819.4 cm³/min (50 in³/min) into brake pipe. The prior art could not determine leakage from auxiliary to emergency as could occur with a faulty reservoir dividing plate.

The current unit applies the valve and maintains the 68.9 KPa (10 psi) reduction. During the maintaining period, auxiliary, brake cylinder and emergency pressures are monitored for charges to indicate leakage into or out of each separation air system. This directly indicates what leakage is present and in what system.

### SEPARATE (STAND ALONE) VENT VALVE TEST

The prior art test unit uses the same orifice to test whether the vent valve goes to emergency and to test whether the emergency portion goes to emergency. The test is performed with the control valve cutout and only brake pipe 12 with the vent valve active.

The current test unit uses different orifices (exhaust valves 156, 158, 160, 162, 164, 166, 168, 170) and thereby different rates of exhaust to check the vent valve and control valve operation as a result of an emergency application. The vent valve should go to emergency at a rate slower-than an emergency portion. Thereby, the current test device tests each with appropriate rates. The emergency portion is disabled from going to emergency by closing the cutout valve 16c and draining the brake pipe pressure at the test unit and the control valve pressure drops to approximately zero. Then, the operator opens the cutout valve 16c. When the test unit senses the build-up of brake pipe pressure coming from the main brake pipe line 12 through the cutout valve 16c, the test unit releases stored air in the reservoir 172 that had been previously charged and closed off before the control valve brake pipe went to zero. This releasing of air from reservoir 172 prevents the vent valve from detecting a large pressure drop, it also doesn't allow the quick access chamber pressure to build-up in the emergency portion thereby nullifying the emergency portion from a go test on the vent valve.

### CONTINUOUS QUICK SERVICE VALVE

The prior art test unit tested the brake pipe 12 without the control valve and the continuous quick service valve in place. The operator was instructed to feel for a blow at the exhaust port to indicate if valve was working properly. Later, the B1 unit must be disabled to test the vent valve unit.

The current test unit monitors the pressure profile to determine if the valve is working properly. Also, the valve 146 need not be disabled to test the vent valve unit by accounting for the additional rate.

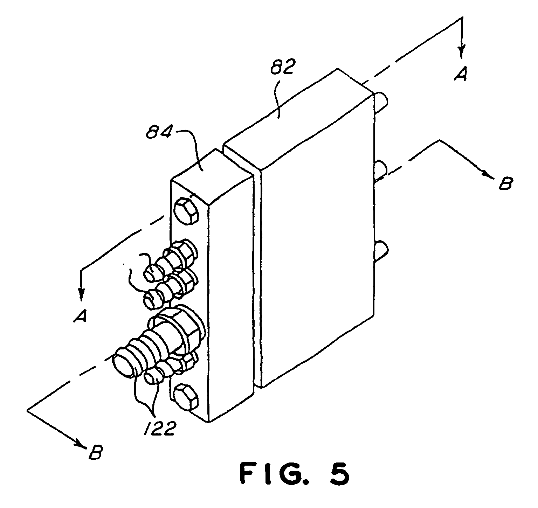

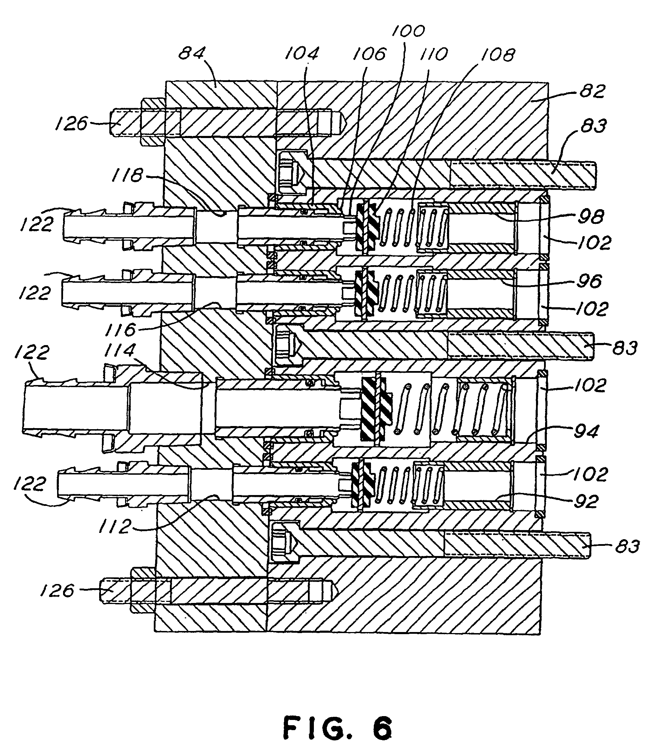

Referring next to Figures 5 and 6, an access housing 82 and adaptor 84 are shown which may connect to the access ports. The access housing 82 has channels 92, 94, 96, 98 for communicating with the respective passageways in the pipe bracket portion 36. The housing channels 92, 94, 96, 98 have opposed ends, with one end of each channel 92, 94, 96, 98 being bordered by an access end 102. Each access end 102 of the access channels 92, 94, 96, 98 being sized and configured to connect to and sealably engage with the respective access port 40, 42, 44, 46. The end of each of the housing channels opposite to each access end 102 have a receiving chamber 104. The housing channels 92, 94, 96, 98 are preferably positioned in the access housing 82 such that the access ends 102 of each of the housing channels 92, 94, 96, 98 correspond in location to the respective access ports 40, 42, 44, 46.

Intermediate the receiving chamber 104 and the access end 102 of each housing channel 92, 94, 96, 98, preferably at a shouldered end of the receiving chamber 104, is a valve seat 106. Access housing 82 preferably has a valve means provided therein. Preferably, a number of internal valve means are provided within the access housing 82, such that a respective internal valve means is provided within each of the housing channels 92, 94, 96, 98. Each such internal valve means is preferably comprised of a spring 108 seated within the housing channel and a stopper 110 engageable with the spring 108, which together operate in cooperation with the valve seat 106. The stoppers 110 are each movable within their respective housing channel 92, 94, 96, 98 and are biased by the springs 108 into contact with the valve seats 106. With its stopper 110 in bias contact with the respective valve seats 106, each internal valve means is said to be in the closed position, in which fluid from its corresponding access port 40, 42, 44, 46 cannot pass through the valve seat 106 into the receiving chamber 104 of its corresponding housing channel 92, 94, 96, 98. Thus, when the internal valve means is in the closed position, no fluid pressure is lost through housing 82. The housing may be secured to the access plate by any convenient means, such as by studs.

As can be seen in Figures 5 and 6, an adaptor 84 may be attached to access housing 82 when it is desired to access the fluid pressures of the various passageways, which represent respectively the fluid pressures in the brake cylinder, the brake pipe, the auxiliary reservoir and the emergency reservoir. The adaptor 84 is connected to the access housing 82 by any convenient means such as by studs 126. Adaptor 84 has channels 112, 114, 116, 118 provided therethrough. The adaptor channels are each bounded at one end by a respective extending member 120, which extends outward from one end of the adaptor 84. At an opposite end of the adaptor channels 112, 114, 116, 118, the adaptor channels are each bounded by a respective fitting 122, which extends outward from the adaptor 84. Adaptor channels 112, 114, 116, 118 are positioned along adaptor 84 such that when the adaptor 84 is placed adjacent the access housing 82, each adaptor channel 112, 114, 116, 118 corresponds in position and location with each respective housing channel 92, 94, 96, 98. Each of the adaptor extending members 120 are sized and configured to fit inside and sealable engage with each respective receiving chamber 104 of the access housing channels 92, 94, 96, 98.

When each adaptor extending member 120 is inserted within its respective receiving chamber 104 of the access housing channels 92, 94, 96, 98, each extending member 120 contacts a respective valve means stopper 110. As the extending members 120 are inserted fully within each receiving chamber 104, the extending members 120 push each stopper 110 overcoming the spring bias against stopper 110 and moving the stopper 110 back away from its respective valve seat 106 into an "open" position. The extending members 120 are sized and configured so that when they are inserted within the receiving chambers 104, fluid may travel around the extending members 120 and into the respective housing channels 92, 94, 96, 98. When the stopper 110 is in the open position, fluid pressure may travel from the passageways through the respective access ports 40, 42, 46, 48 through the respective housing channels 92, 94, 96, 98 and the respective adaptor channels 112, 114, 116, 118 and out of the adaptor fittings 122 where the fluid pressure may be an analyzed.

When the adaptor 84 is separated from the access housing 82 such that each extending member 120 of the adaptor 84 is removed from its corresponding receiving chamber 104 of the access housing 82, the springs 108 will force the stoppers 110 against their respective valve seats 106, causing the valve means to return to the closed position. Thus, when the adaptor 84 is removed from engagement with the access housing 82, fluid pressure is maintained within the access housing 82.

Referring next to Figures 5, 7 and 8, a modified adaptor 184 may be attached to access housing 82 as a means of accessing the fluid pressures of the various passageways in pipe bracket portion 36. With respect to the following description of adaptor 184, the access housing 82 operates in identical fashion as was described with respect to Figures 5 and 6.

The adaptor 184 is affixed to the access housing 82 by any convenient means such as by studs 126. Adaptor 184 has channels 186, 188, 190, 192 provided therethrough. The adaptor channels 186, 188, 190, 192 are each bounded at one end by a respective fitting 194, which extends outward from the adaptor 184. An opposite end of each adaptor channel 186, 188, 190, 192 is connected to a transverse cam shaft bore 196. Provided within the cam shaft bore 196 is a cam shaft 198 having a number of eccentric portions 200. Each eccentric portion 200 is coupled to a respective extending member 202. The respective extending members 202 extend outward from an end of the respective adaptor channel opposite to the end bounded by the fitting 194.

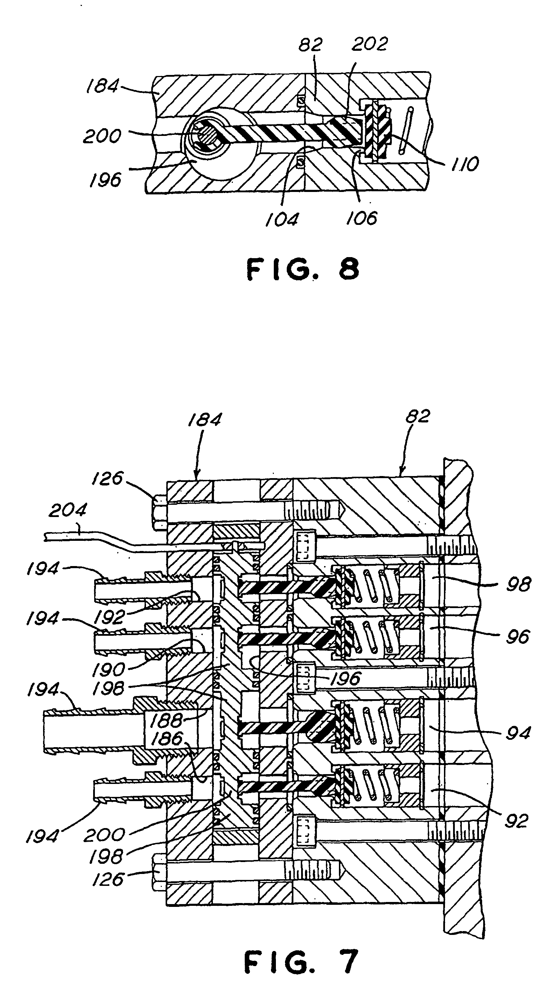

The adaptor channels 186, 188, 190, 192 are positioned along adaptor 184 such that when the adaptor 184 is placed adjacent the access housing 82, each adaptor channel 186, 188, 190, 192 corresponds in position and location with each respective housing channel 92, 94, 96, 98. Each of the adaptor extending members 202 are sized and configured to fit inside and sealably engage with each respective receiving chamber 104 of the access housing channels 92, 94, 96, 98. When adaptor 184 is so positioned adjacent the access housing 82 and is affixed thereto such as by studs 126, the extending members 202 of adaptor 184 extend within receiving chambers 104 but do not contact valve means stopper 110 or, in the alternative, do not sufficiently contact valve means stopper 110 to move valve means stopper 110 overcoming the spring bias provided by spring 108 (not shown in Figures 7 and 8).

Once the adaptor 184 is secured to access housing 82 so that there is a seal between each respective adaptor channel 186, 188, 190, 192 and its respective access housing channel 92, 94, 96, 98, the cam shaft 198 is engaged. A cam handle 204 is provided which is connected to cam shaft 198. Thus, when handle 204 is rotated, cam shaft 198 is rotated as well within cam shaft bore 196. As cam shaft 198 is rotated, cam shaft eccentric portions 200 are moved in a circular path. As the handle 204 is rotated forward, the cam Shaft eccentric portions 200 are rotated towards the access housing 82 causing extending members 202 to be moved further into the access housing 82. When the handle 204 is moved sufficiently, the extending members 202 are inserted fully within each receiving chamber 104, and the extending members 202 push each valve means stopper 110, overcoming the spring bias against stopper 110 and moving the stopper 110 back away from its respective valve seat 106 into an "open" position. The handle 204 is then locked into an open position while testing of the fluid pressures is conducted.

Once it is desired to disconnect the adaptor 184 from the access housing 82, the handle 204 is moved away from the access housing 82 moving the extending members 202 away from and out of each respective receiving chamber 104 so that the valve means stopper 110 is once again biased by the springs against their respective valve seats 106 causing the valve means to return to its "closed" position.

Variations of the shown embodiments are also possible. Thus, while certain present preferred embodiments have been shown and described, it is distinctly understood that the invention is not limited thereto but may be otherwise embodied within the scope of the following claims.

## Claims

1. A portable, automatic single-car test unit (24) for executing a predetermined series of pressure manipulations to evaluate the operating conditions of a railway freight brake control valve (14), such control valve (14) being of the type having a pipe bracket portion (36), with a service portion and an emergency portion mounted thereto, such pipe bracket portion (36) further being connected to a brake pipe (12), an auxiliary reservoir, an emergency reservoir and a brake cylinder, wherein a plurality of passageways are provided to such control valve (14) for providing fluid communication from such brake pipe (12), such brake cylinder, such emergency reservoir and such auxiliary reservoir to respective ones of such service portion and such emergency portion, and wherein ports (40, 42, 44, 46) are provided for accessing such passageways, said test unit (24) comprising:
a pneumatic pressurized air supply (35);
primary valve means (26) for charging and discharging pressurized air in such passageways and for selectively allowing fluid communication between selected ones of such passageways;
a connection (82, 84) attachable to such ports (40, 42, 44, 46) for accessing such passageways, said connection (82, 84) sealably linking such ports (40, 42, 44, 46) with said test unit (24);
means for measuring air pressure (134, 136, 138, 140) representative of the pressure in each of such passageways; and
a computing means (28) having a microprocessor (27) connected to an input output device (25) for operating said primary valve means (26) to selectively pressurize one of such passageways from such pressurized air supply (35), and for verifying operation of such control valve (14) by performing at least one of receiving and storing pressure measurements from said air pressure measuring means (134, 136, 138, 140) and calculating and storing differences between selected pairs of said pressure measurements, and measuring and storing first elapsed times for a predetermined amount of pressure to be reached in selected ones of such passageways beginning from a predetermined event, and measuring and storing the rate of change of selected pressures in such passageways, and measuring and storing second elapsed times from said predetermined event to a change in the rate of change of selected pressures in such passageways.

2. The test unit (24) of claim 1 wherein said connection (82, 84) attachable to such access ports (40, 42, 44, 46) comprises:
(a) a housing (82) having at least one channel (92, 94, 96, 98) extending therethrough, each of said housing channels being bounded at one end by a housing channel access end (102) and at an opposite end by a receiving chamber (104), wherein each said channel access end (102) being sized and configured to sealably engage with a respective one of such access ports (40, 42, 44, 46), said housing (82) further having internal valve means (106, 108, 110) in each of said housing channels (92, 94, 96, 98) with each of said internal valve means movable to a closed position in which fluid pressure is contained within said housing channel corresponding thereto and having an open position in which fluid pressure may exit said housing channel corresponding thereto; and
(b) an adaptor (84) having a selected number of channels (112, 114, 116, 118) extending therethrough, each said adaptor channel (112, 114, 116, 118) being bounded at an end that sealably engages said access housing (82) by a respective extending member (120) and an opposite end of each said adaptor channel (112, 114, 116, 118) being connectable to said primary valve means (26), each of said extending members (120) entering said receiving chamber (104) corresponding thereto for moving said internal valve means (108, 110) to said open position.

3. The test unit (24) of claim 1 further comprising a pressure regulator (130) and valves (142, 144, 146, 148, 150, 152, 154, 155, 156, 158, 160, 162, 164, 166, 168, 170, 176) in said primary valve means (26), said pressure regulator (130) operatively connected to such air supply (35) such that car charging is performed by opening certain of said valves (146, 148, 150, 155) connected to such air supply (35) and to at least one of such passageways, and through which air from such air supply (35) may be directly input to at least one of such passageways.

4. The test unit (24) of claim 3 further comprising a flowmeter (132) in said primary valve means (26) provided between such air supply (35) and said valves (142-176) such that once a selected amount of unregulated air has entered such passageways via said valves (146, 148, 150), regulated air from such air supply (35) may be input to at least one of such passageways via said valves (146, 148, 152) while being monitored by said flowmeter (132).

5. The test unit (24) of claim 1 wherein retainer valve operation is verified by opening said valve (142) operatively connected to such brake cylinder passageway such that fluid pressure in such brake cylinder passageway is increased to a selected level, and wherein said valve (142) is then closed and fluid pressure within such brake cylinder passageway is measured over selected time intervals to determine a rate of pressure drop in such brake cylinder passageway.

6. The test unit (24) of claim 1 wherein slack adjustment operation is verified by manipulation of such brake cylinder through an exhaust valve (144) connecting with such brake cylinder passageway which opens to ambient, and a charging valve (142) provided with such brake cylinder passageway connecting to such air supply (35).

7. The test unit (24) of claim 1 wherein emergency application of such control valve (14) is verified by making an emergency application to such control valve (14) and measuring and comparing pressures representative of the pressure in such brake cylinder passageway, such auxiliary reservoir passageway and such emergency reservoir passageway.

8. The test unit (24) of claim 1 wherein manual release valve operation is verified by making an emergency application to such control valve (14) and actuating a release handle to release such brake cylinder, and wherein the pressures in such auxiliary reservoir passageway and such emergency reservoir passageway are measured over selected time intervals to detect pressure drops.

9. A method for executing a predetermined series of pressure manipulations to evaluate the operating conditions of a railway freight brake control valve (14), such control valve (14) being of the type having a pipe bracket portion (36), with a service portion and an emergency portion mounted thereto, such pipe bracket portion (36) further being connected to a brake pipe (12), an auxiliary reservoir, an emergency reservoir and a brake cylinder, wherein a plurality of passageways are provided to such control valve (14) for providing fluid communication from such brake pipe (12), such brake cylinder, such emergency reservoir, and such auxiliary reservoir to respective ones of such service portion and such emergency portion, said method comprising the steps of:
sealingly linking to and accessing such passageway communicating to such brake pipe (12), and such passageways communicating to at least one of such brake cylinder, such emergency reservoir and such auxiliary reservoir;
providing a pneumatic pressurized air supply (35);
selectively charging from such pressurized air supply (35) and discharging pressurized air in such passageways and selectively providing fluid communication between selected ones of such passageways;
measuring and storing air pressure in selected ones of such passageways;
calculating and storing differences between selected pairs of said measured air pressure;
measuring and storing first elapsed times for a predetermined value of pressure to be reached in selected ones of such passageways beginning from a predetermined event;
measuring and storing the rate of change of selected pressures in such passageways;
measuring and storing second elapsed times from said predetermined event to a change in the rate of change of selected pressures in such passageways; and
storing and outputting said information.

10. The method of claim 9 further comprising operatively connecting a pressure regulator (130) to such air supply (35) and charging selected ones of such passageways by opening valves (146, 148, 150, 155) connected to such air supply (35) and to at least one of such passageways, and directly inputting air from such air supply (35) to at least one of such passageways.

11. The method of claim 10 further comprising providing a flowmeter (132) between such air supply (35) and said valves (142, 144, 146, 148, 150, 152, 154, 155, 156, 158, 160, 162, 164, 166, 168, 170, 176), and inputting regulated air from such air supply (35) to at least one of such passageways via said valves (146, 148, 152) while being monitored by said flowmeter (132) once a selected amount of unregulated air has entered such passageways via said valves (146, 148, 150).

12. The method of claim 9 wherein retainer valve operation is verified by opening said valve (142) operatively connected to such brake cylinder passageway such that fluid pressure in such brake cylinder passageway is increased to a selected level, and then closing said valve (142) and measuring the pressure within such brake cylinder passageway over selected time intervals to determine a rate of pressure drop in such brake cylinder passageway.

13. The method of claim 9 wherein slack adjustment operation is verified by manipulating such brake cylinder through an exhaust valve (144) connecting with such brake cylinder passageway which opens to ambient and a charging valve (142) provided with such brake cylinder passageway between such brake cylinder and such air supply (35).

14. The method of claim 9 wherein emergency application of such control valve (14) is verified by making an emergency application to such control valve (14) and measuring and comparing pressures representative of the pressure in such brake cylinder passageway, such auxiliary reservoir passageway and such emergency reservoir passageway.

15. The method of claim 9 wherein manual release valve operation is verified by making an emergency application to such control valve (14) and actuating a release handle to release such brake cylinder, and wherein the pressures in such auxiliary reservoir passageway and such emergency reservoir passageway are measured over selected time intervals to detect pressure drops.

## Patentansprüche

1. Tragbare, automatische Einwagen-Prüfeinheit (24), mit der eine vorgegebene Reihe von Druckmanipulationen ausgeführt wird, um die Funktionsbedingungen eines Eisenbahn-Güterwagen-Brems-Steuerventlls (14) zu bewerten, wobei das Steuerventil von dem Typ ist, der einen Bremskupplungsabschnitt (36) mit einem daran angebrachten Hauptabschnitt und einem Notabschnitt aufweist, wobei der Bremskupplungsabschnitt (36) des Weiteren mit einer Bremsleitung (12), einem Zusatzbremsbehälter, einem Notbremsbehälter und einem Bremszylinder verbunden ist, wobei eine Vielzahl von Durchlassen zu dem Steuerventil (14) vorhanden sind, um Fluidverbindung von der Bremsleitung (12), dem Bremszylinder, dem Notbremsbehälter und dem Zusatzbremsbehälter zu dem Hauptabschnitt bzw. dem Notabschnitt herzustellen, und wobei Anschlüsse (40, 42, 44, 46) zum Zugang zu den Durchlassen vorhanden sind, und wobei die Prüfeinheit (24) umfasst:
eine pneumatische Druckluftzufuhr (35);
eine Primärventileinrichtung (26) zum Einleiten und Ablassen von Druckluft in die Durchlasse bzw. aus ihnen, die selektiv Fluidverbindung zwischen ausgewählten der Durchlasse ermöglicht;
eine Verbindung (82, 84), die an den Anschlüssen (40, 42, 44, 46) angebracht werden kann, um Zugang zu den Durchlassen zu erhalten, wobei die Verbindung (82, 84) die Anschlüsse (40, 42, 44, 46) dichtend mit der Prüfeinheit (24) verbindet;
eine Einrichtung zum Messen von Luftdruck (134, 136, 138, 140), der für den Druck in jedem der Durchlasse steht; und
eine Berechnungseinrichtung (28) mit einem Mikroprozessor (27), die mit einer Eingabe-Ausgabe-Vorrichtung (25) verbunden ist, um die Primärventileinrichtung (26) so zu betätigen, dass selektiv einer der Durchlasse von der Druckluftzufuhr (35) unter Druck gesetzt wird, und die Funktion des Steuerventils (14) zu prüfen, indem wenigstens eine Empfangs- oder eine Speicherdruckmessung von der Luftdruck-Messeinrichtung (134, 136, 138, 140) ausgeführt wird und Differenzen zwischen ausgewählten Paaren der Druckmessungen errechnet und gespeichert werden, und erste verstrichene Zeiten für einen vorgegebenen Druckwert gemessen und gespeichert werden, der von einem vorgegebenen Ereignis an in ausgewählten der Durchlasse zu erreichen ist, und die Geschwindigkeit der Änderung ausgewählter Drücke in den Durchlassen gemessen und gespeichert wird, und zweite verstrichene Zeiten von dem vorgegebenen Ereignis an bis zu einer Änderung der Geschwindigkeit der Änderung ausgewählter Drücke in den Durchlassen gemessen und gespeichert werden.

2. Prüfeinheit (24) nach Anspruch 1, wobei die Verbindung (82, 84), die an den Zugangsanschlüssen (40, 42, 44, 46) angebracht werden kann, umfasst:
(a) ein Gehäuse (82) mit wenigstens einem Kanal (92, 94, 96, 98), der sich durch dieses hindurch erstreckt, wobei jeder der Gehäusekanäle an einem Ende durch ein Gehäusekanal-Zugangsende (102) und an einem gegenüberliegenden Ende durch eine Aufnahmekammer (104) begrenzt wird, und wobei jedes der Kanal-Zugangsenden (102) so bemessen und aufgebaut ist, dass es dichtend mit einem entsprechenden der Zugangsanschlüsse (40, 42, 44, 46) in Eingriff kommt, und wobei das Gehäuse (82) des Weiteren innere Ventileinrichtungen (106, 108, 110) in jedem der Gehäusekanäle (92, 94, 96, 98) aufweist, wobei jede der inneren Ventileinrichtungen in eine geschlossene Position bewegt werden kann, in der Fluiddruck in dem Gehäusekanal eingeschlossen wird, der dieser entspricht, und eine offene Position hat, in der Fluiddruck aus dem Gehäusekanal austreten kann, der dieser entspricht; und
(b) ein Verbindungsteil (84), das eine ausgewählte Anzahl von Kanälen (112, 114, 116, 118) ausweist, die sich durch dieses hindurcherstrecken, wobei jeder Verbindungsteilkanal (112, 114, 116, 118) an einem Ende, das dichtend mit dem Zugangsgehäuse (82) in Eingriff kommt, durch ein entsprechendes Verlängerungselement (120) begrenzt wird, und an einem gegenüberliegende Ende jedes der Verbindungsteilkanäle (112, 114, 116, 118) mit der Primärventileinrichtung (26) verbunden werden kann, und wobei jedes der Verlängerungselemente (120) in die Aufnahmekammer (104) eintritt, die ihm entspricht, um die innere Ventileinrichtung (108, 110) in die offene Position zu bewegen.

3. Prüfeinheit (24) nach Anspruch 1, die des Weiteren einen Druckregler (130) und Ventile (142, 144, 146, 148, 150, 152, 154, 155, 156, 158, 160, 162, 164, 166, 168, 170, 176) in der Primärventileinrichtung (26) umfasst, wobei der Druckregler (130) funktionell so mit der Luftzufuhr (35) verbunden ist, dass Füllen des Wagens durch das Öffnen bestimmter der Ventile (146, 148, 150, 155) ausgeführt wird, die mit der Luftzufuhr (35) und wenigstens einem der Durchlasse verbunden sind, und über den Luft von der Luftzufuhr (35) direkt in wenigstens einen der Durchlasse eingeleitet werden kann.

4. Prüfeinheit (24) nach Anspruch 3, die des Weiteren einen Durchflussmesser (132) in der Primärventileinrichtung (26) umfasst, der zwischen der Luftzufuhr (35) und den Ventilen (142-176) so angeordnet ist, dass, wenn eine ausgewählte Menge nichtregulierter Luft über die Ventile (146, 148, 150) in die Durchlasse eingetreten ist, regulierte Luft von der Luftzufuhr (35) in wenigstens einen der Durchlasse über die Ventile (146, 148, 152) eingeleitet werden kann, wobei sie von dem Durchflussmesser (132) überwacht wird.

5. Prüfeinheit (24) nach Anspruch 1, wobei die Halteventilfunktion geprüft wird, indem das Ventil (142) geöffnet wird, das funktionell mit dem Bremszylinderdurchlass verbunden ist, so dass der Fluiddruck in dem Bremszylinderdurchlass auf einen ausgewählten Pegel erhöht wird, und wobei das Ventil (142) dann geschlossen wird und Fluiddruck in dem Bremszylinderdurchlass über ausgewählte Zeitintervalle gemessen wird, um eine Geschwindigkeit des Druckabfalls in dem Bremszylinderdurchlass zu bestimmen.

6. Prüfeinheit (24) nach Anspruch 1, wobei Bremsgestängestellfunktion durch Manipulation des Bremszylinders über ein Ablassventil (144), das mit dem Bremszylinderdurchlass verbunden ist, der sich nach außen öffnet, und ein Füllventil (142) geprüft wird, das mit dem Bremszylinderdurchlass versehen ist, der mit der Luftzufuhr (35) verbunden ist.

7. Prüfeinheit (24) nach Anspruch 1, wobei Notfunktion des Steuerventils (14) geprüft wird, indem das Steuerventil (14) in eine Notfunktion versetzt wird und Drücke gemessen und verglichen werden, die für den Druck in dem Bremszylinderdurchlass, dem Zusatzbremsbehälterdurchlass und dem Notbremsbehälterdurchlass stehen.

8. Prüfeinheit (24) nach Anspruch 1, wobei Hand-Löseventil-Funktion geprüft wird, indem das Steuerventil (14) in eine Notfunktion versetzt wird, und ein Lösegriff betätigt wird, um den Bremszylinder zu lösen, und wobei die Drücke in dem Zusatzbremsbehälter-Durchlass und dem Schnellbremsbehälter-Durchlass über ausgewählte Zeitintervalle gemessen werden, um Druckabfälle zu erfassen.

9. Verfahren zum Ausführen einer vorgegebenen Reihe von Druckmanipulationen, um die Funktionsbedingungen eines Eisenbahn-Güterwagen-Brems-Steuerventils (14) zu bewerten, wobei das Steuerventil (14) von dem Typ ist, der einen Bremskupplungsabschnitt (36) aufweist, an dem ein Hauptabschnitt und ein Notabschnitt angebracht sind, wobei der Bremskupplungsabschnitt (36) des Weiteren mit einer Bremsleitung (12), einem Zusatzbremsbehälter, einem Notbremsbehälter und einem Bremszylinder verbunden ist, und wobei eine Vielzahl von Durchlassen zu dem Steuerventil (14) vorhanden sind, um Fluidverbindung von der Bremsleitung (12), dem Bremszylinder, dem Notbremsbehälter und dem Zusatzbremsbehälter zu dem Hauptabschnitt bzw. dem Notabschnitt herzustellen, wobei das Verfahren die folgenden Schritte umfasst:
dichtendes Verbinden mit und Herstellen von Zugang zu dem Durchlass, der mit der Bremsleitung (12) in Verbindung steht, und mit den bzw. zu den Durchlassen, die mit wenigstens dem Bremszylinder, dem Schnellbremsbehälter oder dem Zusatzbremsbehälter in Verbindung stehen;
Bereitstellen einer pneumatischen Druckluftzufuhr (35);
wahlweises Einlassen und Auslassen von Druckluft in den Durchlassen von der Druckluftzufuhr (35) und selektives Herstellen von Fluidverbindung zwischen ausgewählten der Durchlasse;
Messen und Speichern von Luftdruck in ausgewählten der Durchlasse;
Errechnen und Speichern von Differenzen zwischen ausgewählten Paaren des gemessenen Luftdrucks;
Messen und Speichern erster verstrichener Zeiten für einen vorgegebenen Druckwert, der von einem vorgegebenen Ereignis an in ausgewählten der Durchlasse zu erreichen ist;
Messen und Speichern der Geschwindigkeit der Änderung ausgewählter Drücke in den Durchlassen;
Messen und Speichern zweiter verstrichener Zeiten von dem vorgegebenen Ereignis an bis zu einer Änderung der Geschwindigkeit der Änderung ausgewählter Drücke in den Durchlassen; und
Speichern und Ausgeben der Informationen.

10. Verfahren nach Anspruch 9, das des Weiteren das funktionelle Verbinden eines Druckreglers (130) mit der Luftzufuhr (35) und das Füllen ausgewählter der Durchlasse durch Öffnen von Ventilen (146, 138, 150, 155), die mit der Luftzufuhr (35) und wenigstens einem der Durchlasse verbunden sind, und das direkte Einleiten von Luft von der Luftzufuhr (35) in wenigsten einen der Durchlasse umfasst.

11. Verfahren nach Anspruch 10, das des Weiteren das Anordnen eines Durchflussmessers (132) zwischen der Luftzufuhr (35) und den Ventilen (142, 144, 146, 148, 150, 152, 154, 155, 156, 158, 160, 162, 164, 166, 168, 170, 176) und das Einleiten regulierter Luft von der Luftzufuhr (35) in wenigstens einen der Durchlasse über die Ventile (146, 148, 150, 155) bei gleichzeitiger Überwachung durch den Durchflussmesser (132), wenn eine ausgewählte Menge unregulierter Luft über die Ventile (146, 148, 150) in die Durchlasse eingetreten ist, umfasst.

12. Verfahren nach Anspruch 9, wobei die Halteventilfunktion geprüft wird, indem das Ventil (142) geöffnet wird, das funktionell mit dem Bremszylinderdurchlass verbunden ist, so dass Fluiddruck in dem Bremszylinderdurchlass auf einen vorgegebenen Pegel erhöht wird, und das Ventil (142) dann geschlossen wird und der Druck in dem Bremszylinderdurchlass über ausgewählte Zeitintervalle gemessen wird, um eine Geschwindigkeit des Druckabfalls in dem Bremszylinderdurchlass zu bestimmen.

13. Verfahren nach Anspruch 9, wobei Bremsgestängestellfunktion geprüft wird, indem der Bremszylinder über ein Ablassventil (144), das mit dem Bremszylinderdurchlass verbunden ist, der sich nach außen öffnet, und ein Füllventil (142) geprüft wird, das mit dem Bremszylinderdurchlass zwischen dem Bremszylinder und der Luftzufuhr (35) versehen ist.

14. Verfahren nach Anspruch 9, wobei Notfunktion des Steuerventils (14) geprüft wird, indem das Steuerventil (14) in eine Notfunktion versetzt wird und Drücke gemessen und verglichen werden, die für die Drücke in dem Bremszylinderdurchlass, dem Zusatzbremsbehälterdurchlass und dem Notbremsbehälterdurchlass stehen.

15. Verfahren nach Anspruch 9, wobei Hand-Löseventil-Funktion geprüft wird, indem das Steuerventil (14) in eine Notfunktion versetzt wird, und ein Lösegriff betätigt wird, um den Bremszylinder zu lösen, und wobei die Drücke in dem Zusatzbremsbehälterdurchlass und dem Schnellbremsbehälterdurchlass über ausgewählte Zeitintervalle gemessen werden, um Druckabfälle zu erfassen.

## Revendications

1. Unité portative (24) de test automatique pour wagon isolé, destinée à l'exécution d'une série prédéterminée de manipulations de pression pour l'évaluation des conditions de fonctionnement d'une soupape (14) de commande de freinage pour wagon de chemins de fer, la soupape de commande (14) étant du type qui comporte une partie (36) à équerre de tube, ayant une partie de service et une partie de secours montées sur elle, la partie d'équerre de tube (36) étant en outre raccordée à un tube de frein (12), un réservoir auxiliaire, un réservoir de secours et un cylindre de frein, dans laquelle plusieurs passages sont formés vers la soupape de commande (14) pour assurer la communication du fluide par le tube de frein (12), le cylindre de frein, le réservoir de secours et le réservoir auxiliaire vers des parties respectives choisies parmi la partie de service et la partie de secours, et dans laquelle des canaux (40, 42, 44, 46) sont destinés à donner accès à ces passages, l'unité de test (24) comprenant:
une alimentation en air comprimé (35),
un dispositif à soupape primaire (26) destiné à charger l'air comprimé dans les passages et à le décharger, et à permettre sélectivement la communication entre des passages choisis,
un raccord (82, 84) destiné à être fixé aux canaux (40, 42, 44, 46) pour l'accès aux passages, le raccord (82, 84) reliant de façon étanche les canaux (40, 42, 44, 46) à l'unité de test (24),
un dispositif de mesure de la pression pneumatique (134, 136, 138, 140) représentative de la pression dans chacun des passages, et
un dispositif de calcul (28) possédant un microprocesseur (27) relié à un dispositif (25) d'entrée-sortie et destiné à commander le dispositif à soupape primaire (26) assurant la mise sélective sous pression de l'un des passages depuis l'alimentation en air comprimé (35) et à vérifier le fonctionnement de la soupape de commande (14) par exécution d'au moins l'une des mesures par réception et mémorisation de pression à partir du dispositif de mesure de pression pneumatique (134, 136, 138, 140), à calculer et mémoriser les différences entre des paires choisies de mesures de pression, à mesurer et mémoriser des premiers temps écoulés pour qu'une amplitude prédéterminée de la pression soit atteinte dans certains passages choisis à partir d'un événement prédéterminé, à mesurer et mémoriser la vitesse de variation des pressions choisies dans ces passages, et à mesurer et mémoriser des seconds temps écoulés depuis l'événement prédéterminé jusqu'à un changement de la vitesse de variation des pressions choisies dans les passages.

2. Unité de test (24) selon la revendication 1, dans laquelle le raccord (82, 84) destiné à être fixé aux canaux d'accès (40, 42, 44, 46) comprend :
(a) un boîtier (82) ayant au moins un conduit (92, 94, 96, 98) qui s'étend à travers lui, chacun des conduits du boîtier étant délimité à une première extrémité (102) d'accès au conduit du boîtier et à une extrémité opposée par une chambre de logement (104), dans lequel chaque extrémité (102) d'accès à un conduit a une dimension et une configuration telles qu'elle coopère de façon étanche avec un canal respectif parmi les canaux d'accès (40, 42, 44, 46), le boîtier (82) ayant en outre un dispositif à soupape interne (106, 108, 110) dans chacun des conduits du boîtier (92, 94, 96, 98), chacun des dispositifs à soupape interne étant mobile vers une position de fermeture dans laquelle la pression du fluide est retenue dans le conduit du boîtier correspondant et ayant une position d'ouverture dans laquelle la pression du fluide peut quitter le conduit du boîtier correspondant, et
(b) un adaptateur (84) ayant un nombre choisi de conduits (112, 114, 116, 118) qui s'étendent à l'intérieur, chaque conduit (112, 114, 116, 118) de l'adaptateur étant délimité à une première extrémité afin qu'il coopère de manière étanche avec le boîtier d'accès (82) par un organe respectif d'extension (120), et une extrémité opposée de chaque conduit (112, 114, 116, 118) d'adaptateur étant destinée à être raccordée au dispositif à soupape primaire (26), chacun des organes d'extension (120) pénétrant dans la chambre de logement correspondante (104) pour déplacer le dispositif à soupape interne (108, 110) vers la position d'ouverture.

3. Unité de test (24) selon la revendication 1, comprenant en outre un régulateur de pression (130) et des soupapes (142, 144, 146, 148, 150, 152, 154, 155, 156, 158, 160, 162, 164, 166, 168, 170, 176) dans le dispositif (26) à soupape primaire, le régulateur de pression (130) étant connecté pendant le fonctionnement à l'alimentation pneumatique (35) afin que le chargement du wagon soit réalisé par ouverture de certaines des soupapes (146, 148, 150, 155) connectées à l'alimentation pneumatique (35) et à au moins l'un des passages, et par lequel l'air provenant de l'alimentation pneumatique (35) peut être transmis directement à l'un au moins de ces passages.

4. Unité de test (24) selon la revendication 3, comprenant en outre un débitmètre (132) placé dans le dispositif (26) à soupape primaire disposé entre l'alimentation pneumatique (35) et les soupapes (142-176) afin que, lorsqu'une quantité sélectionnée d'air non régulé a pénétré dans les passages par les soupapes (146, 148, 150), l'air régulé provenant de l'alimentation pneumatique (35) puisse être transmis à l'un au moins des passages par l'intermédiaire des soupapes (146, 148, 152) tout en étant contrôlé par le débitmètre (132).

5. Unité de test (24) selon la revendication 1, dans laquelle l'opération de la soupape d'organe de retenue est vérifiée par ouverture de la soupape (142) reliée pendant le fonctionnement à un passage de cylindre de frein de manière que la pression du fluide dans le passage de cylindre de frein augmente à un niveau sélectionné, et dans laquelle la soupape (142) est alors fermée et la pression du fluide dans le passage de cylindre de frein est mesurée pendant des intervalles de temps sélectionnés pour déterminer une vitesse de réduction de pression dans le passage de cylindre de frein.

6. Unité de test (24) selon la revendication 1, dans laquelle l'opération d'ajustement de jeu est vérifiée par manipulation du cylindre de frein par une soupape d'échappement (144) reliée au passage de cylindre de frein qui débouche à l'atmosphère ambiante, et une soupape de chargement (142) placée dans le passage de cylindre de frein relié à l'alimentation pneumatique (35).

7. Unité de test (24) selon la revendication 1, dans laquelle l'application de secours de la soupape de commande (14) est vérifiée par exécution d'une application de secours de cette soupape de commande (14) et mesurée par comparaison des pressions représentatives de la pression dans le passage du cylindre de frein, le passage du réservoir auxiliaire et le passage du réservoir de secours.

8. Unité de test (24) selon la revendication 1, dans laquelle une manoeuvre de soupape de libération manuelle est vérifiée par exécution d'une application de secours à la soupape de commande (14) et manoeuvre d'une poignée de libération du cylindre de frein, et dans laquelle les pressions dans le passage du réservoir auxiliaire et dans le passage du réservoir de secours sont mesurées sur des intervalles de temps sélectionnés pour la détection des réductions de pression.

9. Procédé d'exécution d'une série prédéterminée de manipulations de pression pour l'évaluation des conditions de fonctionnement d'une soupape (14) de commande de frein de wagon de marchandises, la soupape de commande (14) étant du type qui comporte une partie (36) à équerre de tube, avec une partie de service et une partie de secours montées sur elle, ladite partie (36) d'équerre de tube étant en outre raccordée à un tube de frein (12), un réservoir auxiliaire, un réservoir de secours et un cylindre de frein, dans lequel plusieurs passages sont associés à la soupape de commande (14) pour assurer la communication du fluide par le tube de frein (12), le cylindre de frein, le réservoir de secours et le réservoir auxiliaire vers une partie respective parmi la partie de service et la partie de secours, le procédé comprenant les étapes suivantes:
la liaison de manière étanche et l'accès au passage communiquant avec le tube de frein (12) et aux passages communiquant avec l'un au moins parmi le cylindre de frein, le réservoir de secours et le réservoir auxiliaire,
la disposition d'une alimentation (35) en air comprimé,
le chargement sélectif, à partir de l'alimentation en air comprimé (35), et l'évacuation de l'air comprimé par les passages et la réalisation sélective d'une communication pour le fluide entre les passages choisis,
la mesure et la mémorisation de la pression pneumatique dans des passages choisis,
le calcul et la mémorisation de différences entre des paires choisies des pressions pneumatiques mesurées,
la mesure et la mémorisation de premiers temps écoulés pour qu'une valeur prédéterminée de la pression soit atteinte dans des passages choisis depuis un événement prédéterminée,
la mesure et la mémorisation de la vitesse de variation de la pression choisie dans les passages,
la mesure et la mémorisation de seconds temps écoulés depuis l'événement prédéterminé jusqu'à un changement de la vitesse de variation des pressions choisies dans les passages, et
la mémorisation et la transmission de l'information.

10. Procédé selon la revendication 9, comprenant en outre la connexion, pendant le fonctionnement, d'un régulateur de pression (130) à l'alimentation pneumatique (35) et le chargement de certains passages choisis par ouverture de soupapes (146, 148, 152 et 155) raccordées à l'alimentation pneumatique (35) et à au moins l'un des passages, et l'introduction directe d'air de l'alimentation pneumatique (35) dans l'un au moins des passages.

11. Procédé selon la revendication 10, comprenant en outre la disposition d'un débitmètre (132) entre l'alimentation pneumatique (35) et les soupapes (142, 144, 146, 148, 150, 152, 154, 155, 156, 158, 160, 162, 164, 166, 168, 170, 176), et l'introduction d'air régulé de l'alimentation pneumatique (35) dans au moins l'un des passages par l'intermédiaire des soupapes (146, 148, 152) lors du contrôle par le débitmètre (132) une fois qu'une quantité choisie d'air non régulé a pénétré dans les passages par les soupapes (146, 148, 150).

12. Procédé selon la revendication 9, dans lequel la manoeuvre d'une soupape d'organe de retenue est vérifiée par ouverture de la soupape (142) reliée pendant le fonctionnement au passage du cylindre de frein de manière que la pression du fluide dans le passage du cylindre de frein augmente à un niveau choisi, puis par fermeture de la soupape (142) et par mesure de la pression dans le passage du cylindre de frein pendant des intervalles de temps sélectionnés pour déterminer une vitesse de réduction de pression dans un tel passage de cylindre de frein.

13. Procédé selon la revendication 9, dans lequel l'opération d'ajustement de jeu est vérifiée par manipulation du cylindre de frein à l'aide d'une soupape d'échappement (144) qui se raccorde au passage du cylindre de frein qui débouche à l'atmosphère ambiante et d'une soupape de chargement (142) associée au passage de cylindre de frein entre le cylindre de frein et l'alimentation pneumatique (35).

14. Procédé selon la revendication 9, dans lequel l'application de secours de la soupape de commande (14) est vérifiée par exécution d'une application de secours de la soupape de commande (14) et par mesure et comparaison des pressions représentatives de la pression dans le passage du cylindre de frein, le passage du réservoir auxiliaire et le passage du réservoir de secours.

15. Procédé selon la revendication 9, dans lequel la commande manuelle de la soupape de libération est vérifiée par exécution d'une application de secours de la soupape de commande (14) et par activation d'une poignée de libération du cylindre de frein, et dans lequel les pressions dans le passage du réservoir auxiliaire et le passage du réservoir de secours sont mesurées au cours d'intervalles de temps choisis pour la détection des réductions de pression.
